# EUROPEAN PATENT APPLICATION

(11) **EP 4 800 586 A1**
(43) Date of publication of application: **02.09.2026**
(21) Application number: 26156667.3
(22) Date of filing: 05.02.2026
(51) Int. Cl.: G06F 21/55, H04L 9/40

(54) **CLOUD NATIVE THREAT DETECTION, INVESTIGATION, AND RESPONSE SYSTEMS AND METHODS**

(30) Priority: 28.02.2025 US 202519066458
(71) Applicant: Zscaler, Inc., San Jose, CA 95134 (US)
(72) Inventor: TIWARI, Abhishek, San Jose (US); APPAN, Preetha, Austin (US); SINGH, Gurpreet, San Jose (US)
(74) Representative: Dehns

(57) **Abstract**

A cloud native threat detection, investigation, and response system (402) and method (500) are disclosed for protecting cloud native application deployments (400). Sensors (406) deployed on Kubernetes nodes (450) collect runtime telemetry (408), including process activity, system call traces, and network traffic, from an operating system kernel (456) using an extended Berkeley Packet Filter module (460) without modifying application code in pods (452). The runtime telemetry (408) is forwarded to a local collector (462) for compression, deduplication, and optional scrubbing before ingestion into a data fabric (300) together with security logs (416) from a cloud system (100). A threat detection, investigation, and response application (340, 430) analyzes the unified data to identify indicators of compromise and correlates perimeter events blocked by the cloud system (100) with workload-level runtime telemetry by matching malicious domains or Internet Protocol addresses to network flows and process trees, thereby identifying impacted pods (452) or workloads. Based on the correlation, automated remediation actions are initiated, including micro-segmentation quarantine, policy updates, and restriction of lateral movement within the cloud native environment.

## Description

### FIELD OF THE DISCLOSURE

The present disclosure generally relates to computer and networking systems and methods. More particularly, the present disclosure relates to cloud native threat detection, investigation, and response systems and methods.

### BACKGROUND OF THE DISCLOSURE

Cloud native deployments are architectural approaches that leverage containerization, microservices, and dynamic orchestration (often using platforms like Kubernetes) to build and run scalable, resilient applications in the cloud. This model allows teams to develop, deliver, and manage software with greater speed and flexibility, taking advantage of the cloud's elastic infrastructure to scale services up or down as needed. In this environment, workloads are frequently short-lived, services communicate over dynamic network paths, and infrastructure resources can be scattered across multiple clouds or on-premises environments. These characteristics make it challenging to maintain a consistent, real-time view of security risks.

Given these unique demands, organizations require specialized runtime threat detection solutions that can observe every layer of the cloud native infrastructure without introducing prohibitive overhead or complexity. However, many existing threat detection tools were originally designed for traditional endpoint protection or for container monitoring and then adapted to the cloud native space. These tools often rely on intrusive methods-such as kernel modules or agents-that must be installed on individual hosts or containers. While they can capture valuable telemetry, they also create significant operational overhead by requiring constant maintenance and fine-tuning, generate excessive alerts due to broad detection rules that fail to account for cloud native complexities, and lack the specific context needed to accurately interpret signals from microservices-based, ephemeral workloads. As a result, teams using these legacy-style solutions can find themselves overwhelmed by alert noise, struggling to maintain agent integrations, and missing critical indicators of compromise specific to containerized environments.

### BRIEF SUMMARY OF THE DISCLOSURE

Addressing the challenges above requires a modern, lightweight approach that is adaptable to continuous deployment models and capable of providing high-fidelity telemetry without imposing the burdens of intrusive instrumentation and exhaustive rule-tuning. The present disclosure relates to a cloud native threat detection, investigation, and response platform that addresses the aforementioned challenges by leveraging an extended Berkeley Packet Filter (eBPF)-based approach. Unlike traditional solutions that rely on kernel modules or intrusive agents, this platform requires no changes to application deployments, network topology, or application code. By operating at the kernel level, eBPF enables the real-time capture of system calls, network activity, and other critical telemetry without modifying workloads. This design avoids the complexity, maintenance overhead, and performance degradation typically associated with agent-based or kernel-module solutions. As a result, the present disclosure significantly simplifies deployment and operations, reduces alert fatigue by minimizing unnecessary notifications, and provides a high-fidelity runtime threat detection mechanism uniquely suited to cloud native environments.

Variously, the present disclosure encompasses a new security operations center (SOC) application for SecOps teams that delivers comprehensive runtime threat detection, investigation, and response (TDIR) capabilities in modern cloud-native environments-spanning containers, serverless functions, workloads, and services. By consolidating all signals into a unified context and performing deep analysis with eBPF instrumentation, this SOC app can enrich logs with metadata and apply machine learning (ML) and artificial intelligence (AI) algorithms to detect sophisticated threats more accurately. A key differentiator lies in its incorporation of threat signatures sourced from cloud platforms, data fabrics, and threat intelligence feeds, thereby strengthening its detection intelligence. Moreover, the SOC app provides opinionated recommendations, incident response workflows, and automated remediation actions. In an embodiment, the SOC app is built on top of an existing cloud platform, operates offline (non-inline), and functions without hardware appliances, thus enabling SecOps teams to efficiently manage security at scale in distributed, ephemeral cloud native infrastructures.

### BRIEF DESCRIPTION OF THE DRAWINGS

The present disclosure is detailed through various drawings, where like components or steps are indicated by identical reference numbers for clarity and consistency.
FIG. 1 illustrates a network diagram of a cloud system utilized for cloud-based security, i.e., cloud-security-as-a-service, for protecting various clouds and associated applications.
FIG. 2 illustrates a network diagram of an example implementation of the cloud system of FIG. 1.
FIG. 3 illustrates a block diagram of a computing system, which may serve as a foundational component within the cloud system of FIGS. 1 and 2, as well as in endpoints, standalone applications, etc.
FIG. 4 illustrates a logical diagram of the cloud system of FIGS. 1 and 2 and a data fabric associated therewith.
FIG. 5 illustrates an example cloud native app deployment architecture with a cloud native TDIR system.
FIG. 6 illustrates an example deployment for the TDIR system in a cluster in the cloud native app deployment.
FIG. 7 illustrates an example of a PyLoose attack.
FIG. 8 illustrates an example of an attack with remote code execution with Log4j.
FIG. 9 illustrates a flowchart of a method for detecting and responding to threats in a cloud native computing environment.

### DETAILED DESCRIPTION OF THE DISCLOSURE

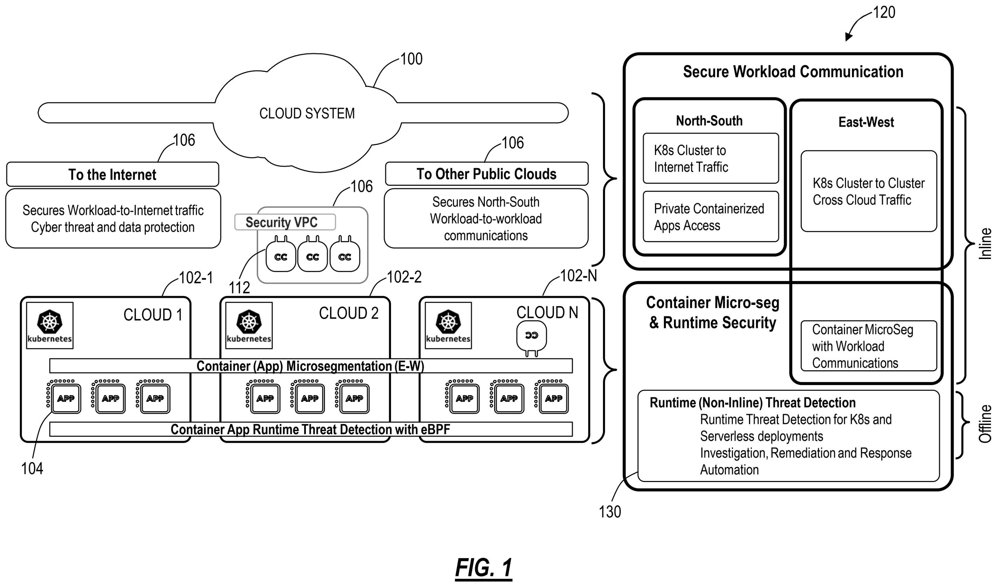

FIG. 1 illustrates a network diagram of a cloud system 100 utilized for cloud-based security, i.e., cloud-security-as-a-service, for protecting various clouds 102-1, 102-2, 102-N and associated applications 104. An example of the cloud system 100 is the Zero Trust Exchange (ZTE) from Zscaler, Inc., the applicant of the present application. In one embodiment, the cloud system 100 is a cloud-based security platform that continuously verifies every user and device connection-using identity, context, and policy-before granting secure, direct access to applications and data, namely zero trust, without relying on a traditional network perimeter. Of course, the cloud system 100 contemplates various implementations for providing cloud-based security. Accordingly, the cloud system 100 is configured to implement secure workload communication to the Internet 106 (workload-to-Internet traffic cyber threat and data protection), to other public clouds 108 (north-south workload-to-workload communications), and to secure virtual private clouds 110 (such as via connectors 112). The connectors 112 are lightweight software agents or virtual appliances designed to securely connect users, devices, or workloads to the applications 104 running in any environment. These connectors form encrypted tunnels and apply zero trust policies that segment traffic at the application layer rather than the network layer, helping to isolate and protect sensitive resources.

Security functions performed by the cloud system 100, logically depicted by arrow 120, include secure workload communications, container micro-segmentation, and runtime security. With respect to secure workload communications, a "workload" refers to the specific set of tasks, applications, or processes that a computer system, server, or data center handles. These workloads can range from running simple web servers and batch jobs to managing complex microservices in a cloud environment. Each workload typically demands resources such as CPU, memory, storage, and network bandwidth. Modern IT infrastructures-particularly those in data centers and cloud environments-require robust monitoring and defense strategies to maintain both performance and security.

Network traffic in this context falls into two primary categories. "North-south traffic" describes data flows between external entities (e.g., users, clients, or external systems) and the internal network. This includes inbound traffic, such as user requests, as well as outbound traffic, like server responses. Traditional perimeter security measures-including firewalls and load balancers-are crucial for inspecting and safeguarding north-south traffic from external threats. In contrast, "east-west traffic" refers to the data that moves laterally within an internal network, facilitating communication between servers, applications, or microservices. For example, a web server querying a database server generates east-west traffic. This internal communication requires high throughput and low latency, and is often secured using techniques like micro-segmentation to mitigate lateral movement during a breach. Together, these concepts underscore the importance of managing both computational workloads and diverse data flows to ensure efficient, secure, and scalable IT environments.

For securing workload communications, the cloud system 100 can monitor Kubernetes (K8s) cluster-to-Internet traffic (north-south) through connectors 112, which forward to the cloud system 100 for policy enforcement and threat inspection. Likewise, the cloud system 100 can monitor private containerized applications through another set of application connectors 112. For east-west traffic (i.e., cluster-to-cluster or intra-data-center communications), the cloud system 100 can similarly utilize the connectors 112 to observe and secure K8s cluster-to-cluster activity. Additionally, the cloud system 100 can provide container micro-segmentation to isolate workloads, confine breaches, and further protect sensitive resources. Building on these capabilities, the present disclosure adds a feature of runtime (non-inline) threat detection 130 for K8s and serverless deployments, including investigation, remediation, and response automation. By integrating deep visibility-potentially through eBPF-based telemetry or equivalent means-the cloud system 100 can deliver accurate, real-time insights into ephemeral container and serverless environments, helping security teams proactively identify threats, streamline incident response, and automate remediation actions to maintain robust security postures across diverse cloud-native applications.

In particular, the runtime threat detection 130 is enhanced by mapping, correlating and augmenting network-based detection in the cloud system 100 with a runtime detection and response at the workload level. The runtime threat detection 130 addresses following major problems (Jobs to be done) in cloud native deployments -
(1) Cloud Runtime Threat Detection, Investigation and Response (TDIR): the runtime threat detection 130 detects runtime threats using modern (kernel safe) lightweight eBPF based monitoring to detect threats using runtime signals such as network logs, process, system call, file access, shell spawns, and the like.
(2) Signature based Runtime Threat Detection: the runtime threat detection 130 leverages the power of a threat database from threat intelligence sources, such as from various security services offered by the cloud system 100, external runtime threat libraries and well-known frameworks such as MITRE / NIST to detect known threats / Tactics, Techniques, and Procedures (TTPs).
(3) AI/ML Behavioral Analytics based Runtime Threat Detection: the runtime threat detection 130 leverages the power of AI/ML techniques to detect novel threats and zero-day attacks, that evade traditional signature based detection mechanisms
(4) Application programming interface (API) Threat Detection and Response: the runtime threat detection 130 detects Runtime API attack surface in a modern Cloud native environment using eBPF-based API/Application discovery. The runtime threat detection 130 also detects sensitive data and API based threats by leveraging data protection techniques through the cloud system 100 (egress) and application protection (ingress) technology inside the runtime detection engine.

### Example Implementation of the Cloud System

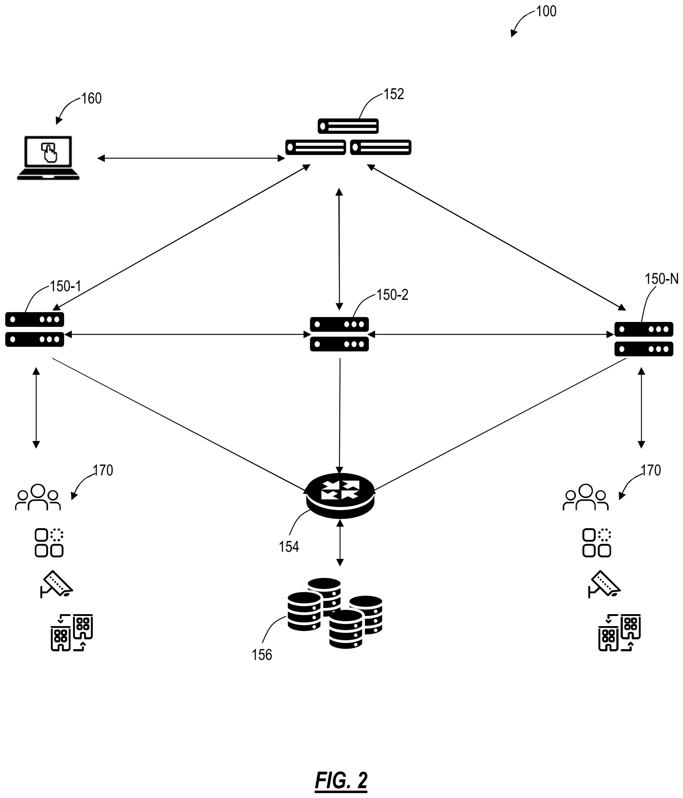

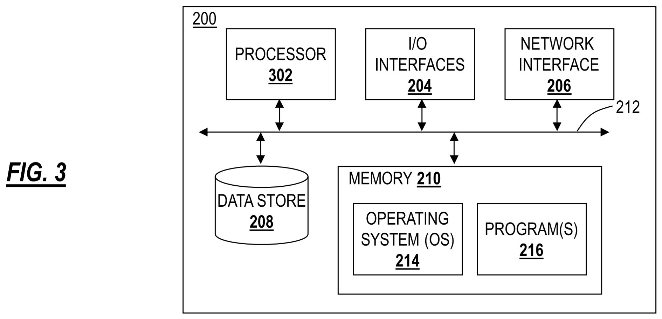

FIG. 2 illustrates a network diagram of an example implementation of the cloud system 100. In one embodiment, the cloud system 100 includes a plurality of distributed, interconnected nodes 150-labeled as nodes 150-1, 150-2, ..., 150-N-each of which interfaces with a central authority (CA) 152. While depicted as discrete entities, each node 150 can represent one or more servers, including physical hardware, clustered server environments, or virtual machines (VMs) running atop shared infrastructure (collectively referred to as a "computing system"). An illustrative example of such a computing system is provided in FIG. 3.

To support scalable log collection and monitoring, the cloud system 100 also incorporates a log router 154. This log router 154 is a dedicated subsystem that aggregates event data, security alerts, connection metadata, and usage statistics generated by the nodes 150, then directs these logs into a storage cluster 156. The storage cluster 156 can be backed by a highly available, fault-tolerant data store-such as a distributed file system or a cloud-based object storage service-ensuring that logs are securely archived and easily retrievable for forensic analysis, compliance auditing, and performance diagnostics.

The central authority (CA) 152 operates as the cloud system 100's command and control hub, providing centralized oversight and coordination by managing global policies, delivering real-time threat intelligence, and orchestrating security configuration updates to each of the nodes 150. For example, when a newly discovered zero-day vulnerability is identified, the CA 152 can immediately push updated rules, signatures, or machine learning models to all nodes 150. Likewise, if an organization-wide data protection policy or regulatory compliance rule changes, the CA 152 disseminates the update across the network, ensuring a consistent enforcement posture throughout the cloud system 100. In one implementation, tenant administrators can access these functions through a user interface (UI) in a management system 160.

Each node 150 serves as a strategic ingress point-or "onramp"-for traffic originating from endpoints 170. The nodes 150 apply the policies and rules received from the CA 152, performing real-time traffic inspection, user authentication, threat detection, data loss prevention (DLP), and access control enforcement. This ensures that endpoints 170 receive uniform protection and policy compliance regardless of their physical location or the network from which they connect. When an endpoint 170 attempts to access a resource-such as the Internet, a SaaS application, or another cloud 102-the traffic is automatically routed to the nearest available node 150 or a node selected based on load balancing, capacity, or tenant-specific requirements. This location-agnostic approach ensures that each endpoint 170 continuously operates under the same security policies defined by the tenant's administrators, thereby delivering consistent protection and a uniform user experience on a global scale.

An endpoint 170 can be virtually any entity that sends or receives data. This includes user devices such as desktops, laptops, smartphones, and tablets, as well as virtual workloads running specific applications or containerized software with its dependencies. Regardless of whether it is physical or virtual, every endpoint 170 plays a critical role in system functionality and data exchange, making it an essential part of modern IT infrastructures that must be protected and monitored accordingly.

The interplay among the nodes 150, the central authority 152, the log router 154, and the storage cluster 156 creates a cohesive, cloud-native security and networking fabric. This infrastructure is designed for scalability and resilience, with seamless updates, rapid threat response, and uniform policy enforcement. By maintaining continuous synchronization among these components, the cloud system 100 ensures that all endpoints 170 benefit from a perpetually evolving, high-security environment.

The central authority (CA) 152 serves as the authoritative repository and management layer for all tenant policies, configuration settings, and global security intelligence within the cloud system 100. It maintains a consolidated view of each tenant's security and compliance requirements-including access controls, data protection rules, content filtering parameters, and DLP dictionaries-and continuously ingests real-time threat intelligence feeds. This enables the CA 152 to detect emerging vulnerabilities and push regular software or database updates that keep all nodes 150 aligned with the latest protective measures.

In a multi-tenant cloud model, reliability and resilience are paramount. Consequently, the CA 152 is architected with redundancy and geo-distribution. It is replicated across multiple data centers and cloud regions, employing load balancing and failover mechanisms to maintain uninterrupted policy availability even if one location experiences downtime. This approach underpins the system's global reach, ensuring that tenants-regardless of geographic dispersion-benefit from up-to-date policy enforcement and threat intelligence.

The nodes 150 maintain persistent, encrypted channels with the CA 152 to retrieve these policies and updates. For example, when a new endpoint 170 connects to a given node 150, that node sends a policy request over the secure channel. In response, the CA 152 dynamically calculates which rules and restrictions apply to that endpoint 170 based on the tenant's security configurations and the endpoint's attributes (e.g., user identity, device posture, location). To optimize performance and minimize bandwidth use, the CA 152 delivers the calculated policy in a compressed bitmap format, reducing latency during retrieval.

Once the node 150 receives this policy, it locally caches the tenant's configuration to enable rapid rule enforcement for subsequent requests from the same endpoint 170. This caching mechanism ensures low-latency responses, even under high-traffic loads, while the system 100 remains adaptable to changing security conditions. When an administrator updates a policy-such as revising access privileges or adding DLP dictionaries-through the management system 160, the CA 152 propagates this update by issuing a signal to invalidate cached policies at the nodes 150.

This invalidation process occurs via periodic "heartbeat" messages exchanged between the CA 152 and the nodes 150. These heartbeats serve as both a health check and an update trigger. If the CA 152 indicates that a policy revision has occurred, the nodes 150 recognize that cached policies are no longer valid. The next time an endpoint 170 sends a request, the node 150 must retrieve the updated policy from the CA 152. Through this mechanism, policy enforcement remains continuously synchronized with the latest tenant directives, threat intelligence, and compliance requirements. In other words, the CA 152 acts as a centralized, resilient, and ever-updating source of truth for all decisions related to security and compliance throughout the cloud system 100.

In various implementations, endpoint traffic is directed through the cloud system 100 by employing lightweight forwarding applications, secure tunnels, or proxy services (i.e., the connectors 112) that integrate with existing network architectures. For example, an endpoint 170-be it a user's laptop, a containerized workload, or an IoT sensor-may run a small forwarding agent at the operating system or application layer. This agent intercepts outbound traffic and redirects it to the cloud system 100. Once the traffic reaches an ingress point in the cloud, encrypted connections (e.g., TLS or IPsec) carry it to specialized processing nodes 150.

These encrypted tunnels ensure confidentiality and integrity, mitigating the risk of unauthorized access or tampering in transit. Depending on the network topology, tunnels may be established per user, per application, or per site, providing flexibility in how different classes of endpoints connect. For branch offices or data center-to-cloud scenarios, site-level tunnels (e.g., via SD-WAN appliances or virtual edge devices) can forward all outbound traffic to the platform without requiring individual devices to handle encryption or routing tasks.

Once traffic arrives within the cloud system 100, a distributed set of nodes 150 can terminate and inspect it at the application layer, applying any applicable security or data protection policies. If approved, the traffic is then forwarded to its intended destination (e.g., SaaS applications, the open Internet, or other cloud environments). Through intelligent routing and load balancing, the cloud system 100 optimizes path selection, enforces consistent security policies worldwide, and remains highly available. This architecture also supports zero trust principles by continuously verifying user identity, device health, and context prior to granting access, all while remaining largely transparent to end users.

Altogether, the combination of endpoint-level forwarding agents, encrypted tunnels, and proxy-based inspection allows the cloud system 100 to function inline at scale, delivering real-time security, data protection, and policy enforcement across a geographically diverse set of endpoints 170 and network environments.

The cloud system 100 can be deployed in multiple forms, such as a private cloud running entirely within one organization's infrastructure, a public cloud hosted by a third-party provider, or a hybrid model that combines elements of both to address unique performance, security, or regulatory needs. In each scenario, cloud computing abstracts away the details of the underlying physical resources (e.g., servers, storage arrays, or network devices), presenting them as flexible, on-demand services. This abstraction allows organizations to rapidly scale compute, storage, and bandwidth allocations without large upfront capital expenditures.

The U.S. National Institute of Standards and Technology (NIST) defines cloud computing as "a model for enabling convenient, on-demand network access to a shared pool of configurable computing resources ... that can be rapidly provisioned and released with minimal management effort or service provider interaction." Compared to traditional client-server models, cloud computing typically provides applications via a web interface, removing or reducing the need for extensive client-side software installations. Centralized hosting also enables providers to uniformly apply updates, security patches, and licensing changes, ensuring that endpoints 170 always have access to the most current and secure versions of each service.

"Software as a Service" (SaaS) is a prevalent model in cloud computing, referring to application software delivered over the Internet through browsers or lightweight clients. Users benefit from ongoing improvements, rapid feature releases, and minimal local maintenance. The term "the cloud" is shorthand for these virtualized computing services or a specific cloud environment. The cloud system 100 exemplifies such a cloud-based solution, though it should be understood that other architectures, deployment patterns, and configurations may be equally suitable for different requirements.

### Cloud Security Services

Core to the cloud system 100 is a comprehensive, integrated platform designed to provide advanced services to endpoints 170. These offerings include, but are not limited to, cyber protection services, data protection and compliance, zero trust networking, private application access, and risk management with security analytics.

Cyber protection services focus on threat prevention, detection, and response. They may incorporate next-generation firewalls (NGFW), intrusion detection and prevention systems (IDS/IPS), and advanced malware protection. The cloud system 100 can perform real-time analysis of network traffic, user behavior, and application data, leveraging machine learning and global threat intelligence feeds to identify malicious activities, isolate affected endpoints, and block attacks before they compromise critical resources.

Data protection and compliance mechanisms ensure the confidentiality, integrity, and availability of data. The cloud system 100 may use strong encryption at rest and in transit, secure backup and recovery solutions, and DLP controls to guard sensitive information. It can also automate enforcement of industry-specific and regulatory standards such as GDPR, HIPAA, or PCI-DSS, thereby enhancing data governance and simplifying audit processes.

Zero trust networking in the cloud system 100 entails continuous validation of user identities, device posture checks before granting access, and micro-segmentation to isolate workloads. This approach prevents lateral movement within the network and ensures that every access request-whether to an application or dataset-is authenticated and authorized on a real-time, per-session basis.

Private application access extends security to non-publicly accessible resources hosted in data centers or private clouds. The cloud system 100 leverages techniques such as software-defined perimeters (SDP) and identity-based controls, ensuring that only authenticated and authorized entities can access internal applications. By avoiding direct exposure of these systems to the Internet, the solution significantly reduces the potential attack surface.

Risk management and security analytics involve aggregating and analyzing vast amounts of data to help security teams understand their overall posture, detect patterns or anomalies, and prioritize threats. The cloud system 100 may compute risk scores for endpoints 170, perform continuous compliance checks, and run scenario-based exercises to bolster cyber resilience strategies. Through dashboards and reports, security professionals can visualize potential weaknesses, measure policy effectiveness, and implement targeted improvements.

Collectively, these integrated services form a robust defensive architecture that safeguards data, intellectual property, and mission-critical applications. By orchestrating security, access control, and data management across users, devices, and workloads, the cloud system 100 provides a centralized, strategic hub for organizations to uphold efficiency, meet regulatory obligations, and maintain productivity in hybrid, multi-cloud, or global IT environments.

During operation, the cloud system 100 is positioned inline, constantly examining and filtering traffic originating from the endpoints 170 before it reaches its destination. Acting as a secure intermediary, the cloud system 100 applies real-time threat intelligence, enforces data protection rules, and validates access policies at every network hop. Leveraging distributed proxy nodes, software-defined networking, and intelligent routing, the system 100 ensures that each connection undergoes a thorough, policy-driven security check. For external services (e.g., the Internet or SaaS), the policy engine inspects traffic content, identity attributes, and threat signals before permitting access. By conducting these operations continuously, the cloud system 100 detects anomalies early, prevents malicious payloads from spreading, and provides in-depth analytics that enable organizations to fine-tune their defenses proactively.

The endpoints 170 typically belong to a specific tenant-an enterprise, corporation, or any organization that administers a defined set of users, devices, and workloads under a unified security and compliance policy. Tenants leverage the cloud system 100 to enforce shared rules, manage configurations, and monitor events across all associated endpoints 170. While terms like "tenant," "enterprise," "organization," "corporation," and "company" are used interchangeably herein, each refers to a logically defined entity governed by consistent security policies, monitoring, and enforcement.

In a multi-tenant architecture, multiple distinct tenants operate on the same underlying infrastructure while remaining logically isolated from one another. This design safeguards each tenant's data, policies, and control plane from unauthorized access by other tenants. At the same time, the cloud system 100 benefits from economies of scale: it can consolidate global threat intelligence, advanced analytics frameworks, and management consoles into a shared platform. When a new threat emerges in one tenant environment, the system 100 can swiftly propagate protective measures-such as updated signatures or policy adjustments-to all other tenants, minimizing the risk of compromise system-wide.

The multi-tenant model also accelerates innovation by allowing platform-wide feature enhancements, performance optimizations, and security patches to be deployed centrally. Tenants gain immediate access to these improvements without additional administrative overhead, ensuring that endpoints 170 across the cloud system 100 remain protected by the latest defenses. This combination of streamlined updates, collective threat intelligence, and tenant isolation forms the backbone of a continuously adaptive, globally scalable security platform-one that not only mitigates existing risks but also evolves to address new and emerging threats.

### Example computing system architecture

FIG. 3 illustrates a block diagram of a computing system 200, which may serve as a foundational component within the cloud system 100, as well as in endpoints 170, nodes 150, the central authority 152, or standalone applications. Multiple instances of computing system 200 can be combined or distributed to form these elements. Conceptually, computing system 200 can be deployed on physical servers, machine clusters, virtual machines (VMs), or serverless computing platforms. Regardless of the underlying infrastructure, computing system 200 generally includes a processor 202, I/O interfaces 204, a network interface 206, a data store 208, and memory 210.

FIG. 3 is a simplified representation. Actual implementations may incorporate additional hardware (e.g., accelerators, graphics processing units (GPUs), field-programmable gate arrays (FPGAs), cryptographic modules) and more sophisticated interconnect fabrics for high throughput and low latency. The illustrated components (202, 204, 206, 208, 210) communicate over a local interface 212, which may be realized via wired or wireless buses, high-speed links, or switching fabrics. This local interface 212 can also integrate controllers, buffers, caches, drivers, and receivers to optimize data exchange and resource sharing.

The processor 202-such as a CPU, multicore processor, system-on-chip (SoC), or a specialized compute element-executes software instructions. It may be a general-purpose or specialized processor chosen for performance, power efficiency, or workload compatibility. During operation, the processor 202 retrieves instructions from memory 210, coordinates data exchanges with data store 208, and manages system operations. In large-scale deployments (e.g., cloud system 100), multiple processors 202 or parallel compute architectures may be employed to handle high traffic loads and complex tasks efficiently. The I/O interfaces 204 provide the computing system 200 with input and output capabilities, supporting peripherals such as keyboards, touchscreens, sensors, and displays. Depending on the scenario, these interfaces may also accommodate specialized devices for system management, debugging, or maintenance.

The network interface 206 enables connectivity to external networks (e.g., the Internet, private corporate networks, or cloud environments). It can be an Ethernet adapter, WLAN adapter, 5G modem, or a virtual interface in a cloud environments. By using secure transport protocols and encryption, the network interface 206 safeguards data traveling over public or semi-public networks while ensuring full participation in distributed, cloud-based architectures. The data store 208 represents the storage resources available to computing system 200, holding information on a persistent or temporary basis. It may use volatile memory (e.g., RAM) for fast access or nonvolatile media (e.g., solid-state drives, hard disk drives, optical media) for long-term retention. In some implementations, data store 208 can integrate with external storage systems, NAS/SAN infrastructures, or cloud-based storage services. The stored content may include operational logs, configuration files, policy data, program binaries, and cached computation results. In the context of cloud system 100, data store 208 could hold threat intelligence feeds, tenant policies, analytics outputs, and audit trails. External or distributed storage can also provide global deduplication, encryption at rest, and multi-site replication for resiliency and disaster recovery.

The memory 210 serves as the main working memory for processor 202. Often composed of volatile elements like DRAM (e.g., DDR or SDRAM), it may also include nonvolatile components (e.g., Flash, NVRAM) for a balance of speed and persistence. Memory 210 can be distributed across multiple nodes in large-scale deployments, enabling high-performance data processing for modern cloud applications. It typically stores the operating system (O/S) 214 and one or more programs 216. The O/S 214 manages core system operations (e.g., process scheduling, memory allocation, file systems, networking), while programs 216 implement specific logic-such as policy enforcement engines, threat detection modules, load balancing routines, or data analytics-that collectively enable the cloud system 100 to function.

In summary, the computing system 200 provides a flexible and scalable building block for the cloud system 100 and other environments. Its modular design, combined with robust hardware and software components, supports reliable operation and efficient execution of complex tasks across a wide range of computing scenarios.

### Cloud apps

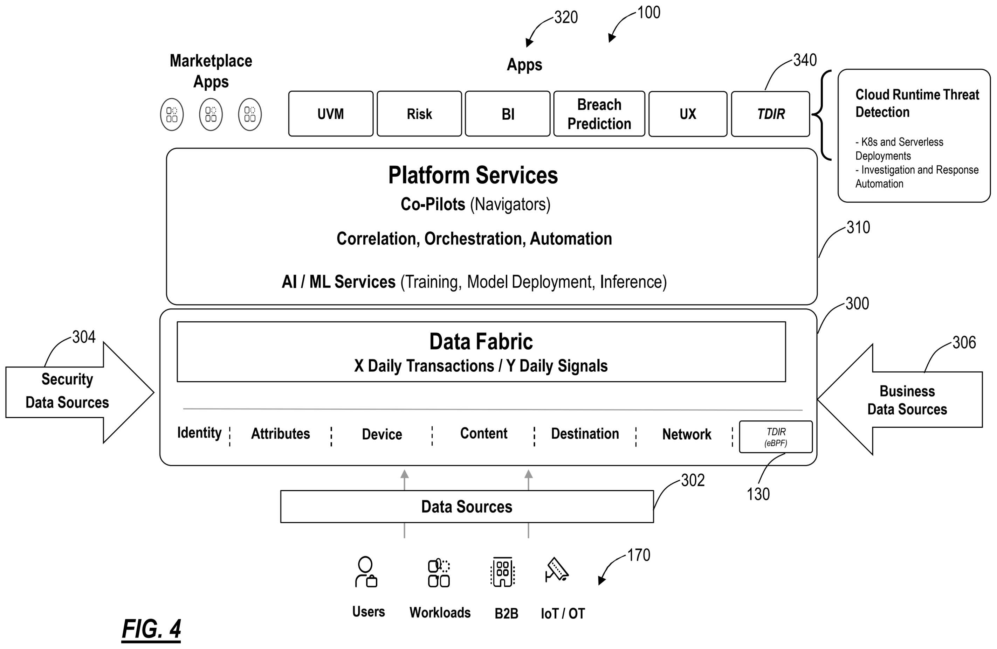

FIG. 4 illustrates a logical diagram of the cloud system 100 and a data fabric 300 associated therewith. In general, the data fabric 300 is a data store designed to aggregate and unify information from multiple security tools and business systems, including the cloud system 100 itself. This data fabric 300 may be implemented on various hardware architectures-such as clustered servers, distributed storage appliances, or multi-cloud data lakes-enabling large-scale ingestion and real-time processing of diverse data sets. In particular, data sources for the data fabric 300 can include, by way of example, data 302 from the endpoints 170, which may be captured and monitored through the cloud system 100, as well as additional security data sources 304 and business data sources 306. The data 302 can be obtained from logs stored within the storage cluster 156 of the cloud system 100. An illustrative example of such logging functionality is Nanolog from Zscaler, Inc., which is a distributed, multi-tenant log processing and analytics engine designed to handle substantial transaction volumes in real time. Nanolog ingests traffic data from across the cloud system 100, compresses it, normalizes it into consistent formats, and indexes it for rapid searching and reporting. By streamlining log collection and facilitating near-instantaneous analysis, Nanolog enables the data fabric 300 to be continuously updated with relevant security events and network insights.

The security data sources 304 can encompass identity-related information (e.g., multi-factor authentication logs, user privilege levels), endpoint detection and response (EDR) alerts, incident logs, and threat intelligence feeds that capture external threat landscapes. Meanwhile, the business data sources 306 can include IT cost and licensing records, organizational and HR data (e.g., user roles, departments, and job functions), and configuration management database (CMDB) details that track infrastructure assets and their inter-dependencies. Collectively, these various inputs yield a rich, multi-dimensional data set in the data fabric 300 that covers all aspects of IT, networking, and security infrastructures. Such data may represent on the order of X daily transactions resulting in Y daily signals, where Y far exceeds X (e.g., X in the hundreds of billions and Y in the hundreds of trillions), illustrating the continually growing scale of these operations. The data fabric 300 is architected to handle such high-volume and high-velocity data flows while maintaining data consistency, availability, and security.

On top of the data fabric 300, a set of platform services 310 is logically deployed to operate on the unified data. These platform services 310 can include co-pilots, which serve as Al-driven assistants that allow administrators and other users to interact with the data in natural language or via guided workflows, as well as correlation, orchestration, and automation tools that enable dynamic policy enforcement and event-driven responses. In addition, AI and machine learning services within the platform services 310 can be leveraged for model training, real-time inference, anomaly detection, or predictive analytics. Built on this foundation, various applications 320 are provided to deliver higher-level capabilities such as unified vulnerability management (UVM), risk analysis, business intelligence (BI), breach prediction, and user experience monitoring. A marketplace framework can further allow third parties to introduce custom applications that tap into the underlying data fabric 300 for specialized use cases. Thus, the layered architecture of the data fabric 300, platform services 310, and applications 320 enables an extensible ecosystem within the cloud system 100 for both in-house and third-party solutions, supporting continuous innovation and seamless data-driven operations.

The present disclosure expands upon the data fabric 300 by incorporating runtime threat detection data 130, which can include monitoring feeds derived from eBPF instrumentation. In containerized and serverless environments, eBPF enables deep visibility into kernel-level events (e.g., network packets, process activity, and system calls) without requiring extensive modifications to individual workloads. By feeding this granular runtime data into the data fabric 300, security teams can correlate low-level indicators of compromise or anomalous behaviors with higher-level threat intelligence and business context. Additionally, the present disclosure provides a TDIR (threat detection, investigation, and response) application 340 for cloud runtime threat detection, specifically tailored to Kubernetes (K8s) clusters and serverless deployments. Operating atop the data fabric 300, the TDIR app 340 leverages aggregated eBPF telemetry, container metadata, and threat feeds to automate investigation and response workflows. For example, it can map suspicious kernel events back to specific container instances, trigger orchestration tasks to quarantine compromised workloads, and generate human-readable incident reports for compliance. Thus, by integrating runtime visibility with the broader data ecosystem, the TDIR app 340 delivers an end-to-end solution that enriches threat detection and expedites incident response in modern cloud-native environments.

### Cloud Native Runtime Threat Detection and Response

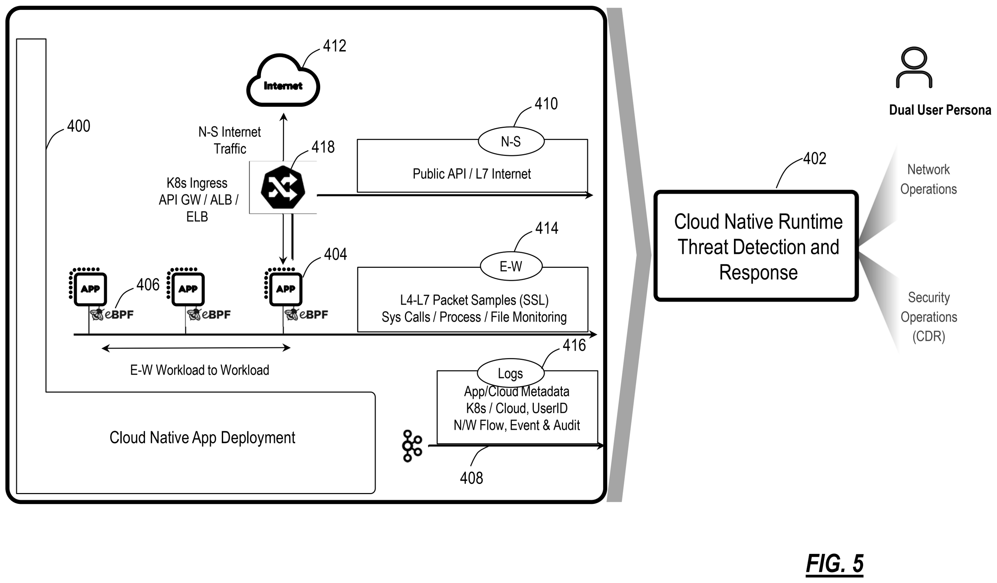

FIG. 5 illustrates an example cloud native app deployment 400 architecture with a cloud native TDIR system 402. The following provides an overview of the major components in the diagram, along with their definitions and roles in a cloud-native threat detection and response workflow. First, cloud native app deployment 400 includes a suite of containerized or serverless workloads orchestrated by platforms such as Kubernetes (K8s), Amazon EKS, Azure AKS, Google GKE, AWS Lambda, Knative, or the like. This layer hosts the actual applications and microservices (generally shown as apps 404) that make up a modern, cloud-native environment, whether running in public clouds (AWS, Microsoft Azure, Google Cloud), private clouds, in on-premises data centers, hybrid clouds, etc.

The deployment 400 includes eBPF sensors 406 running within the kernel space of container hosts or serverless runtimes. These provide low-level, real-time visibility into system calls, process activity, and network traffic without requiring changes to each individual container. The monitored data 408 (process events, network flows, etc.) is then forwarded for security analytics, allowing deep insight into runtime behavior.

N-S (North-South) traffic 410 includes ingress and egress traffic between the cloud-native deployment and external networks or the Internet 412. E-W (East-West) traffic 414 includes lateral traffic among services or pods within the same cluster or data center. Logs 416 include aggregated event records (e.g., system logs, application logs, security alerts) that capture historical or real-time operational details. The logs 416 can include a message-streaming or log-aggregation platform, commonly Apache Kafka, to collects logs, events, and telemetry from across the environment (including from eBPF sensors 406 and other sources). This data can then be streamed in real time to analytics services, the data fabric 300, or the TDIR system 402.

A Kubernetes Ingress component 418 provides a centralized entry point for external traffic into the cluster. It defines routing rules to direct client requests (often hypertext transfer protocol (HTTP) or HTTP secure (HTTPS)) to the correct Services and pods within the Kubernetes environment. This component can also handle Layer 7 load balancing, SSL/TLS termination, and name-based virtual hosting, thereby controlling both north-south traffic flows. In more advanced implementations, the K8s Ingress can integrate with the eBPF sensors 406 to gather telemetry on ingress connections, apply security policies, and enforce granular rate limits or web application firewall (WAF) rules.

In a typical deployment, the underlying physical infrastructure for the cloud native app deployment 400 architecture resides in one or more data centers-whether on-premises, in colocation facilities, or within public cloud provider regions. Each data center commonly hosts racks of servers equipped with high-throughput network interfaces, local storage, and virtualization or container orchestration software. These servers form the compute layer on which Kubernetes nodes, serverless runtimes, or other microservices platforms run. Top-of-rack (ToR) switches and spine-leaf architectures provide the data center's internal "fabric," ensuring high-bandwidth and low-latency links between compute nodes. Hardware load balancers or software-defined networking (SDN) gateways may interconnect the data center to the outside world, handling north-south traffic. Within the data center, specialized infrastructure-such as hardware accelerators (e.g., SmartNICs, GPUs), Hardware Security Modules (HSMs), or eBPF-enhanced network cards-can offload or enhance security and observability tasks. These components are typically distributed across multiple availability zones or clusters to provide redundancy and fault tolerance.

The eBPF sensors 406 resides on each compute node's kernel layer, monitoring system and network events without significant overhead. Collected logs and telemetry are then forwarded to centralized streaming platforms (e.g., Kafka) or analytics engines, which may also be hosted on dedicated hardware or virtualized servers. In this way, the physical layout of servers, network switches, and storage devices in the data center underpins the entire cloud-native architecture, facilitating scalable performance, real-time observability, and automated threat detection.

The TDIR system 402 includes the eBPF sensors 406 and the TDIR application 340 that operates atop the data fabric 300 to continuously monitor a cloud native app deployment 400, including Kubernetes (K8s) clusters, serverless functions, and various service endpoints. It ingests runtime signals (such as eBPF telemetry, container logs, and network events) from data pipelines-e.g., Apache Kafka or equivalent streaming platforms-and fuses these with additional threat intelligence sources.

Once the TDIR system 402 receives relevant security events, it applies both signature-based detection mechanisms and AI/ML-driven behavioral anomaly detection to identify suspicious patterns, vulnerabilities, or active breaches across the cloud native app deployment 400. Given that modern microservices are distributed and dynamic, the TDIR system 402 tracks both the north-south (N-S) traffic 410 entering or leaving the cluster as well as the east-west (E-W) traffic 414 between internal services. This comprehensive visibility helps the system 402 promptly detect threats such as lateral movement, privilege escalation, or application-level attacks.

By integrating with the Kubernetes Ingress 418, service meshes, and serverless runtime APIs, the TDIR system 402 taps into real-time event streams detailing how traffic flows within and beyond the cluster. It thus maintains an up-to-date view of ephemeral containers, function invocations, and microservice interactions. Through the eBPF sensors 406, the TDIR system 402 gains kernel-level insights into both external traffic (N-S) and internal microservice communication (E-W). This vantage point enables swift detection of anomalies such as unauthorized lateral movements, inter-container exploits, or data exfiltration attempts.

Employing a dual strategy, the TDIR system 402 uses signature-based rules for known threats (e.g., common vulnerabilities and exposures (CVE) fingerprints, suspicious file hashes) alongside AI/ML-based behavioral analysis. Machine learning models can flag deviations from normal operational baselines, thereby detecting zero-day exploits or novel attack vectors. Upon spotting anomalies, the TDIR system 402 correlates signals with both external and internal context-such as DevSecOps alerts, CSPM (Cloud Security Posture Management) or DSPM (Data Security Posture Management) findings, user identity data, and application metadata. By unifying these disparate data points, security teams can rapidly pinpoint the root cause of an incident and assess its business impact.

Following alert prioritization and ranking, the TDIR system 402 generates actionable recommendations to mitigate threats. It can, for example, quarantine an affected container, lock down suspicious credentials, or initiate a policy update through the orchestrator. Response workflows may be partially or fully automated, triggering enforcement steps (e.g., removing compromised nodes from a load balancer, rolling back to a known-good container image) with minimal manual intervention, thereby reducing mean time to respond (MTTR).

Through these capabilities, the TDIR system 402 delivers an end-to-end security solution, seamlessly integrating runtime, configuration, and threat-intelligence data to protect the cloud native app deployment 400 from advanced threats and vulnerabilities.

### TDIR system

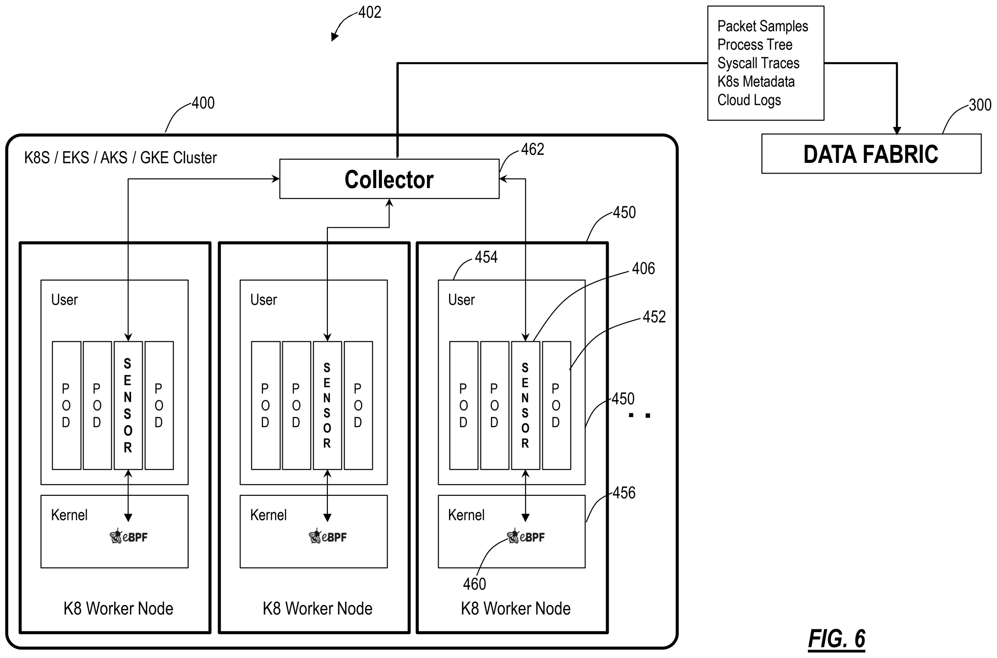

FIG. 6 illustrates an example deployment of the TDIR system 402 in a cluster within the cloud native app deployment 400. The cluster includes one or more Kubernetes nodes 450. On each Kubernetes node 450, multiple pods 452 and a sensor 406 component run in user space 454 above an operating system kernel 456. The kernel 456 layer includes an eBPF module 460, which provides low-level visibility into system and network events, such as process creation, network sockets, and file I/O. The sensor406 leverages eBPF telemetry by subscribing to these kernel-level signals, then passing the collected metrics and trace data upward-either for local analysis or forwarding to a collector 462. Each pod 452 (or container) executes alongside the sensor 406 in user space 454 but remains logically isolated from direct kernel monitoring. Consequently, the pods 452 rely on the sensor's 406 integration with eBPF for deep runtime observability.

The collector 462 aggregates data from the sensor 406-including packet samples, process trees, system call traces, Kubernetes metadata, and cloud logs-and provides it to the data fabric 300. The data fabric 300 then ingests, stores, and analyzes this information to enable both threat detection and public API egress protection. In one embodiment, the sensor 406 runs as a pod on each container host or Kubernetes worker node. Within that pod, the eBPF module 460 filters and probes kernel events, collecting runtime data (e.g., network flows, process telemetry). The sensor 406 pod connects to the local collector 462 to send the aggregated runtime data to the data fabric 300. Notably, eBPF support is available on multiple Kubernetes distributions, including EKS, AKS, GKE, and OpenShift.

In an embodiment, the TDIR system 402 integrates with the cloud system 100 to address the challenge of correlating attacks blocked at the network or cloud perimeter with the specific containerized workloads (or "runtime inversion of control (IoC)") that were targeted. By bridging network-level events and runtime telemetry, the TDIR system 402 provides comprehensive visibility into how external threats interact with microservices, thereby enabling rapid incident investigation and automated remediation. The integration operates through the following components and workflow:
(1) Sensor 406 on Container Hosts: The sensor 406 runs on each container host or Kubernetes node, collecting granular runtime telemetry such as packet logs, process trees, and system call traces (e.g., via eBPF) from containerized applications. This data illuminates internal container behaviors-new processes, file system interactions, and network flows-that are critical for uncovering subtle compromises.
(2) K8s Metadata and Cloud Logs Collection: In parallel, the TDIR system 402 ingests Kubernetes metadata (e.g., pod labels, deployments, replica sets) and cloud logs (e.g., ingress or firewall logs, serverless function logs) to contextualize the observed runtime signals. Mapping each event to its corresponding application or microservice configuration enables precise identification of the affected container or function instance.
(3) Local Collector 462 in the K8s Cluster: The sensor 406 forwards its collected data to a lightweight local collector 462 process running within the Kubernetes cluster. This collector 462 compresses and deduplicates telemetry while applying PII scrubbing policies, then sends the cleaned data to the data fabric 300. The combination of compression and scrubbing ensures efficient transfer and adherence to privacy requirements.
(4) TDIR 340 for Runtime Threat Analysis: Once the data from the local collector 462 is ingested into the data fabric 300, the TDIR app 340 analyzes it in conjunction with logs 416 from the cloud system 100. If the cloud system 100 blocks a command-and-control (C2) communication (egress) or detects malware (ingress), the TDIR system 402 correlates these external signals with its internal runtime loCs. This linkage addresses the "Last Mile Problem," tracing malicious activity from network interception back to the specific container(s) or microservice.
(5) Threat Tracing and Enforcement: By correlating network-level blocks with runtime data, the TDIR system 402 definitively attributes attacks to individual containers or workloads. Based on this insight, it can apply micro-segmentation policies that automatically quarantine compromised containers. Alternatively, the system may escalate alerts to security teams with recommended remedial actions-such as restarting pods, revoking credentials, or modifying firewall rules.

Through this closed-loop security model, the TDIR system 402 not only captures blocked attacks at the perimeter but also ties those blocks back to the internally impacted runtime environments. This approach enables rapid root-cause investigation and substantially reduces dwell time, providing a unified view of external threats and their internal implications and thereby lowering both mean time to detect (MTTD) and mean time to respond (MTTR).

In another embodiment, the TDIR system 402 addresses the challenge of discovering unprotected applications or APIs in a Kubernetes (K8s) environment, then securing them through private application access connectors. In such a scenario, an organization's K8s cluster may contain numerous microservices and APIs not integrated with existing Zero-Trust or private-access solutions offered by the cloud system 100. To identify these endpoints and mitigate associated risks, the TDIR system 402 leverages the following attack surface discovery mechanism:
(1) N-S Layer 7 Packet and API Capture: The sensor 406 collects HTTP request/response headers, REST API calls, and session metadata for inbound and outbound (north-south) traffic at the application layer (Layer 7). By focusing on external interfaces, the TDIR system 402 pinpoints public or unprotected entry points.
(2) Selective Capture of External API Requests: The TDIR system 402 intentionally does not track east-west (E-W) traffic or gRPC calls within the cluster. Instead, it targets external-facing APIs most susceptible to attacks.
(3) K8s, Cloud, and API Metadata Collection: The TDIR system 402 augments captured traffic with Kubernetes metadata (e.g., K8s Ingress configs) and information from cloud environments. This metadata enriches the discovery process by detailing user roles, application connectors, and exposure points.
(4) Local Collector462 for Dedupe, Compression, and PII Scrubbing: The sensor 406 transmits gathered HTTP/API data to a local collector 462 in the cluster, which compresses, deduplicates, and scrubs PII before forwarding the information to the data fabric 300.
(5) Data Fabric 300 Cataloging: Upon ingestion, the data fabric 300 constructs an organized registry of all N-S APIs and applications served by the K8s cluster or Ingress. This registry covers both internal (user/workload) and external (internet) client origins.
(6) Attack Surface Discovery and Classification: Utilizing this registry, the TDIR system 402 classifies discovered APIs or Apps based on their exposure status and security measures, such as: Private Apps Not Protected, Private Apps/APIs Protected, Public Apps/APIs.
(7) Flagging Unprotected and Public APIs: Unprotected private APIs and public APIs are flagged for heightened security measures. These might include deploying private application access connectors, enabling web application firewalls (WAF), or applying additional rate-limiting policies.
(8) Compliance and Sensitive Data Scanning: Finally, the TDIR system 402 inspects traffic flows for sensitive data (e.g., PCI DSS, HIPAA) and raises alerts for compliance violations, triggering escalations or automated mitigation as needed.

Through this discovery and classification framework, the TDIR system 402 not only uncovers and documents previously unknown or improperly secured applications and APIs but also streamlines their integration into a Zero-Trust or private access model. As a result, security teams gain real-time, consolidated visibility of their exposed services, enabling them to prioritize risk reduction, automate policy enforcement, and maintain a robust security posture throughout the Kubernetes environment.

### East-West Cloud Native Runtime Threat Detection

In cloud-native environments, east-west traffic refers to the lateral data flows within and among containerized workloads and microservices inside a Kubernetes cluster. The TDIR system 402 monitors such internal communications by capturing various runtime signals, including packet samples with optional SSL/TLS decryption, process-tree snapshots, syscall traces, Kubernetes metadata, cloud logs, and both workload and user identities. By analyzing these signals, the TDIR system 402 performs east-west runtime threat detection through a multi-layered approach:
(1) Threat Correlation with the Cloud System 100: The TDIR system 402 correlates IOCs (indicators of compromise) in runtime data with enforcement actions taken by the cloud system 100. When the cloud system 100 blocks suspicious activity at the perimeter (e.g., a command-and-control session), the TDIR system 402 can pinpoint which internal apps or containers were affected. This end-to-end correlation enables security teams to swiftly identify the specific workloads that experienced malicious or anomalous traffic and take targeted remediation steps.
(2) Signature-Based Detection: The TDIR system 402 employs classical signature-matching for known intrusion patterns at layers 4-7, including command-and-control beacons, reverse shell exploits (e.g., netcat), and privilege escalations (e.g., unauthorized use of "su," suspicious file or device access). It also incorporates threat intelligence from frameworks like MITRE ATT&CK and vendor-specific feeds-such as signatures from threat intelligence-to detect ransomware and other high-impact threats.
(3) ML-Based Anomaly Detection: Machine learning algorithms establish baselines for normal network and system behaviors by continuously monitoring packet flows (network behavior baselining) and process hierarchies (system behavior baselining). Using workload and user identity context, the TDIR system 402 flags deviations that may indicate emerging or zero-day threats, enabling proactive detection before attackers can escalate privileges or exfiltrate data.

In addition to these detection capabilities, the TDIR system 402 supports automated or semi-automated responses to anomalies and attacks. It can dynamically update security policies, feed new rules to a microsegmentation platform, or integrate with Kubernetes CNI plugins to implement network restrictions in near real time. By unifying perimeter enforcement through the cloud system 100 with detailed east-west visibility at runtime, the TDIR system offers a comprehensive defense against lateral movement and sophisticated attacks within containerized infrastructures.

### North-South: API Attack Surface & Sensitive Data Detection

In addition to its east-west visibility, the TDIR system 402 provides comprehensive monitoring for north-south (N-S) traffic by capturing Layer 7 (HTTP/S) flows, optionally with SSL decryption. These runtime signals include details about public API endpoints, private or internal APIs, sensitive data patterns, user configurations, Kubernetes metadata, and various cloud logs. By incorporating these data sources, the TDIR system 402 can detect, classify, and secure API attack surfaces across both public-facing and internal services, as well as identify sensitive information flowing through them.
(1) API Attack Surface Discovery: Discovery and Cataloging of APIs: The TDIR system 402 automatically enumerates and catalogs private APIs, public APIs, and APIs protected by private-access mechanisms. This process enables organizations to identify potential exposures and segment the environment based on risk levels. Public vs. Private Classification: APIs are assessed by ingress and access policies to determine whether they are externally accessible or intended solely for internal consumption, thereby clarifying which endpoints represent the greatest threat surface.
(2) Sensitive Data Detection: Public/Partner API Data Scans: By analyzing HTTP/S traffic and payloads in both public and partner-facing APIs, the TDIR system 402 searches for sensitive data-such as credit card numbers (PCI), healthcare data (HIPAA), or personally identifiable information (PII). Data Compliance Checks: The TDIR system 402 correlates identified data with relevant compliance frameworks, allowing security teams to proactively address violations and meet regulatory requirements.
(3) Alerts and Integrations: API Risk Scoring / Inventory: The TDIR system 402 maintains a real-time API inventory, complete with risk scores based on exposure level, detection events, and compliance posture. Unprotected Internal Apps / API Alerts: If internal APIs or applications lack appropriate access controls or encryption, the system 402 automatically generates alerts for prompt remediation. Sensitive Data Detection Alerts: Traffic containing sensitive or regulated data triggers alerts, allowing policy enforcement to block or quarantine suspicious flows. Attack Surface Reduction via Private Access: By integrating with private access solutions, the TDIR system 402 can automatically restrict risky APIs to authorized users, reducing the overall threat surface.

With these capabilities, the TDIR system 402 offers a holistic north-south security solution that identifies and secures exposed APIs, monitors sensitive data flows, and enforces risk-based policies-ensuring that potential vulnerabilities are rapidly mitigated before they can be exploited.

### Example attack: PyLoose

PyLoose is a specialized fileless malware designed to exploit cloud workloads by commandeering their computational resources for cryptocurrency mining. It retrieves its fileless payload from "paste.c-net.org"-a Pastebin-like site-via an HTTPS GET request, directly loading the malware into Python's runtime memory without writing any files to disk. After decoding and decompressing the PyLoose script, the malware employs the Linux "memfd" utility to load a precompiled XMRig miner directly into the infected instance's memory. From there, the miner initiates outbound connections to a cryptocurrency mining pool, effectively creating a command-and-control (C2) channel that stealthily diverts the compromised system's resources for unauthorized mining activities.

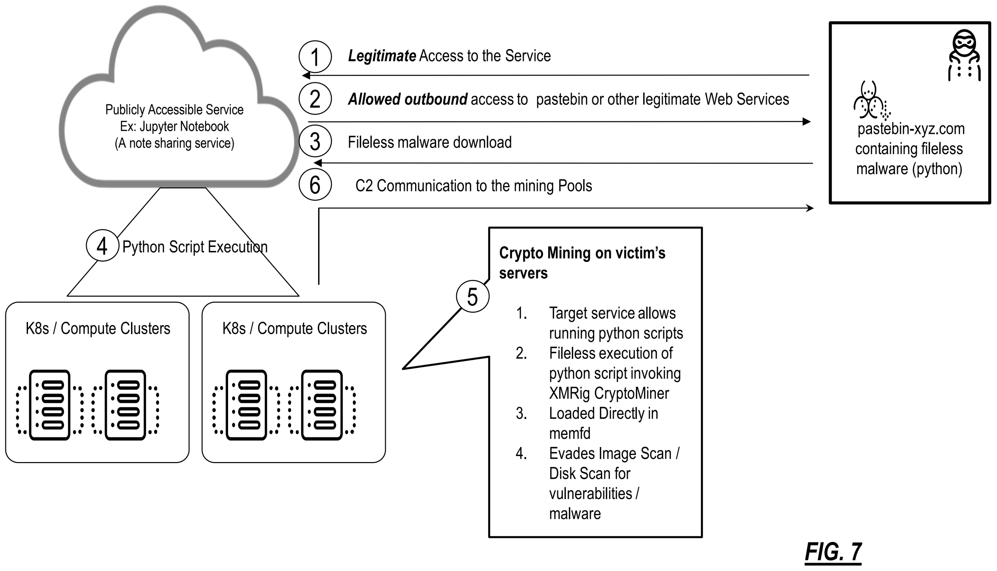

FIG. 7 illustrates an example of a PyLoose attack. In this example attack flow, a cloud-based workload (illustrated as the large cloud on the left) inadvertently fetches and runs the PyLoose malware entirely in memory, without dropping files to disk. As shown by the numbered steps:
(1) Malicious GET Request: The infected workload makes an HTTPS GET request to a pastebin-like website ("paste.c-net.org") to retrieve the hidden PyLoose payload.
(2) In-Memory Loading: Rather than saving the payload to the host's file system, the malware immediately loads the encoded Python script into runtime memory.
(3) Decoding & Decompression: The payload decodes and decompresses itself on the fly, preparing the next-stage miner program (XMRig) for execution.
(4) Fileless Execution: Using Linux's "memfd" mechanism, the malware injects the precompiled XMRig miner into memory so that no trace appears on disk.
(5) Outbound Connection to Mining Pool: Once running in memory, XMRig establishes a network connection with a cryptocurrency mining pool (i.e., its command-and-control channel) to begin siphoning resources for unauthorized mining.
(6) Ongoing Illicit Mining: The compromised workload continues to run the miner as a background process, consuming compute cycles and potentially racking up cloud usage costs without the victim's immediate knowledge.

By combining fileless infection methods with real-time memory injection, PyLoose avoids many traditional antivirus scans and leverages the cloud instance's CPU capacity for covert cryptocurrency mining.

### Detecting PyLoose with the cloud system 100 and the TDIR system 402

In this illustrative scenario, (1) the cloud system 100 first detects and blocks PyLoose-related activities at the perimeter-specifically the initial malware download and any subsequent command-and-control (C2) communication attempts to mining pools. By analyzing outbound traffic and leveraging threat intelligence, the cloud system 100 intercepts these malicious requests before the malware can fully establish its mining infrastructure.

Meanwhile, (2) the TDIR system 402 monitors the affected runtime environments for low-level indicators of compromise (IOCs). Upon discovering suspicious behavior-such as fileless execution within a container, code loaded into memory via the memfd utility, or unexpected processes in a pod-the TDIR system 402 correlates these runtime signals with the blocked attacks reported by the cloud system 100. From these insights, the TDIR system 402 identifies exactly which pod or compute instance is impacted, classifying the threat as PyLoose and confirming the malware's fileless execution methodology.

Finally, (3) remediation actions are initiated. The TDIR system 402 generates context-aware recommendations based on the scope and nature of the detected intrusion. These recommendations can trigger micro-segmentation policies to isolate compromised containers, instruct the cloud system 100 to update existing security rules to block similar threats, or automate workflows that revoke credentials and roll back instances to safe images. By combining perimeter defense from the cloud system 100 with fine-grained runtime detection in TDIR system 402, organizations achieve a closed-loop security model that identifies threats early, contains them quickly, and prevents further lateral spread or resource misuse.

### Example Attack: Remote Code Execution with Log4j

Log4j is a popular logging framework implemented in Java and ported to other languages. It leverages the Java Naming and Directory Interface (JNDI), an API that provides naming and directory functionality to applications, allowing log messages to reference external resources. In certain vulnerable versions of the Log4j library, JNDI lookups are neither sufficiently validated nor sanitized, exposing the system to attacker-controlled endpoints-often via LDAP or similar protocols. Consequently, if an attacker gains control of log messages or the parameters contained within them, the Log4j component can be tricked into fetching and executing arbitrary code from a malicious LDAP server, thereby enabling remote code execution when message lookup substitution is enabled. Log4j exploit us used for illustration, but this example is applicable to any exploit that can lead to eventual remote code execution via remote shell.

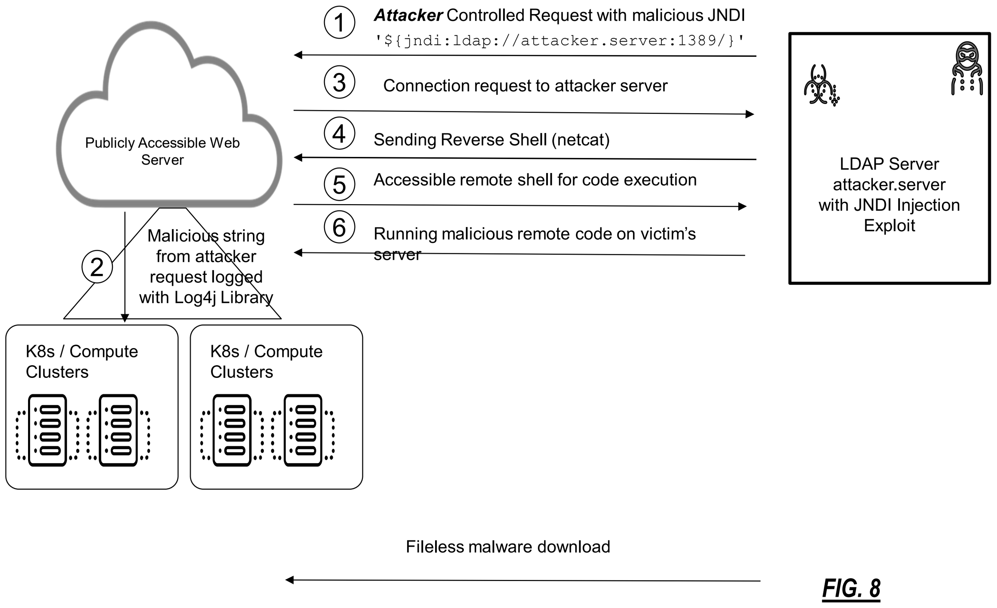

FIG. 8 illustrates an example of an attack with remote code execution with Log4j. FIG. 8 shows an example Log4j remote code execution (RCE) attack in which a malicious request, once logged by a vulnerable application, triggers a JNDI lookup to download and execute harmful code. At (1), a target server or application is running a susceptible version of Log4j in the cloud. An attacker sends a malicious request with specially crafted JNDI references, as indicated at (2). The server's logging functionality then processes this request using Log4j, which at (3) initiates a JNDI call to a rogue LDAP or similar directory service under the attacker's control. At (4), the LDAP server returns hostile Java code. The application unwittingly loads and executes the code at (5), granting the attacker remote code execution privileges. Finally, at (6), the attacker gains unauthorized access or control over the victim environment, highlighting how an unprotected Log4j library can allow external inputs to escalate into full-blown RCE attacks.

### Detecting Lon4j Remote Code Execution with cloud system 100 supporting private applications and the TDIR system 402

When a vulnerable application, accessible through private application services provided by the cloud system 100, processes inbound HTTP requests, the cloud system 100 inspects both the request and response content for malicious patterns. Specifically, it can detect attacker-controlled JNDI references or outbound connections that Log4j might initiate if it is tricked into loading remote code. As soon as it detects strings indicative of malicious JNDI injection, the cloud system 100 blocks the request at the perimeter (ingress) and prevents any subsequent command-and-control (C2) traffic to attacker servers.

Meanwhile, the TDIR system 402 runs within the runtime environment, gathering low-level telemetry such as process trees, filesystem operations, and network connections. This enables the TDIR system 402 to spot critical runtime indicators of compromise (IOCs)-including requests handled by the Log4j library, unauthorized commands running in a shell (e.g., via netcat), or Java bytecode loading from untrusted external servers. Upon correlating these runtime IOCs with the cloud system's alerts (e.g., blocked JNDI injection attempts), the TDIR system 402 confirms the presence of a Log4j RCE exploit in progress.

Together, these detections trigger multiple remedial actions. The cloud system 100 can automatically adjust policies to block recurring C2 connections and quarantine the affected workloads. Simultaneously, the TDIR system 402 can enforce micro-segmentation policies to isolate compromised containers, recommend patches for servers running vulnerable Log4j versions, or automate credential revocations. By uniting perimeter-level blocking from the cloud system 100 with detailed runtime analysis from the TDIR system 402, organizations gain a comprehensive defense strategy against Log4j-based remote code execution attempts.

### Method

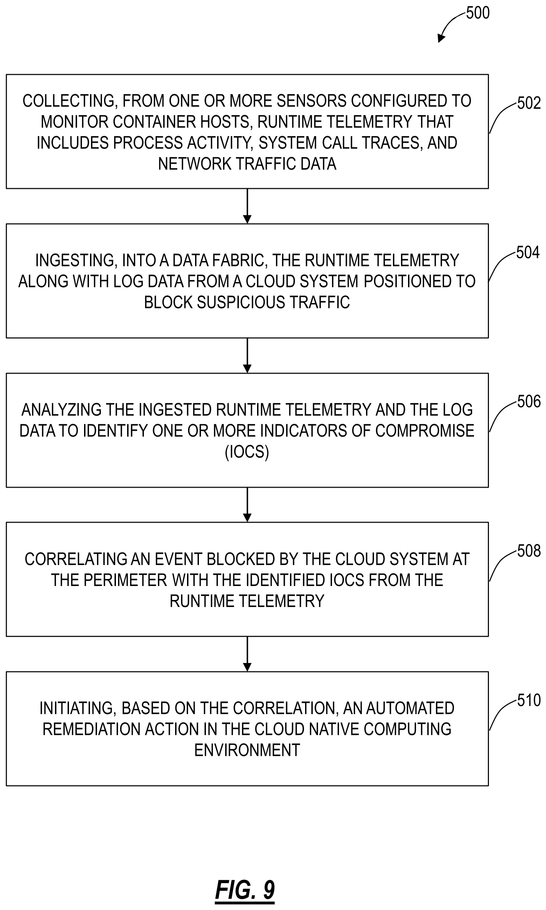

FIG. 9 illustrates a flowchart of a method 500 for detecting and responding to threats in a cloud native computing environment. The method 500 includes collecting, from one or more sensors configured to monitor container hosts, runtime telemetry that includes process activity, system call traces, and network traffic data (step 502); ingesting, into a data fabric, the runtime telemetry along with log data from a cloud system positioned to block suspicious traffic (step 504); analyzing the ingested runtime telemetry and the log data to identify one or more indicators of compromise (loCs) (step 506); correlating an event blocked by the cloud system at the perimeter with the identified loCs from the runtime telemetry (step 508); and initiating, based on the correlation, an automated remediation action in the cloud native computing environment (step 510).

Collecting the runtime telemetry includes deploying extended Berkeley Packet Filter (eBPF) instrumentation in the kernel layer of each container host; and filtering kernel-level events via the eBPF to capture real-time process activity and network flows without modifying application code. Ingesting into the data fabric further includes compressing, deduplicating, and scrubbing personally identifiable information (PII) from the runtime telemetry prior to storage; and unifying logs from multiple cloud environments, serverless functions, and containerized workloads into the data fabric for centralized analysis.

The analyzing can include applying signature-based threat detection rules to detect known intrusion patterns, suspicious file hashes, or privilege-escalation signatures; and applying machine learning models to baseline process and network behaviors in order to detect anomalous or zero-day attacks. The signature-based threat detection rules can include intelligence from the MITRE ATT&CK framework and external threat feeds. Correlating the blocked perimeter event with runtime loCs can include matching a malicious domain or Internet Protocol (IP) address blocked by the cloud system to a network flow or process tree entry observed by a threat detection, investigation, and response (TDIR) system in at least one container; and identifying a specific container or workload as impacted, thereby pinpointing the source of the intrusion or malicious behavior.

The automated remediation action can include one or more of quarantining a compromised container via micro-segmentation policies; revoking credentials or shutting down suspicious processes in the affected container; or updating firewall or zero-trust policies to block similar threats across the cloud system. The method can further include monitoring east-west lateral movement among containers by tracking kernel-level packet data for suspicious internal traffic patterns; and triggering a micro-segmentation rule to limit inter-container communication when malicious or anomalous activity is detected. The method can further include discovering unprotected or publicly exposed APIs by analyzing Layer 7 traffic at the perimeter and in the runtime environment; and flagging any application programming interfaces (APIs) that lack zero trust or private-access protection. Discovering APIs can include capturing inbound hypertext transfer protocol (HTTP) request and response metadata to assemble an API inventory within the data fabric; and classifying each API endpoint as public, private, or private-access-protected, based on ingress rules and authentication settings. The method can further include scanning traffic flows for sensitive data, including healthcare or financial information, in the discovered APIs; mapping any detected data to applicable compliance frameworks; and raising alerts when the system detects unencrypted or improperly handled sensitive data.

The automated remediation action in response to discovering unprotected APIs can include recommending the deployment of private application access connectors; enforcing web application firewall (WAF) rules; or applying rate-limiting to high-risk external endpoints. The method can further include receiving, via a management interface, one or more recommended incident response actions automatically generated; and executing, upon authorization, the recommended actions in the cloud native computing environment to isolate threats and update policies. The cloud system can be configured to inspect perimeter traffic for malicious references, payloads, or injection attempts; and block egress traffic to known malicious domains or Internet Protocol (IP) addresses prior to reaching any container or workload in the environment. The analyzing operates off the main data path, such that no inline proxies or intrusive kernel modules are required to intercept container traffic, thereby minimizing overhead and operational complexity.

### Processing circuitry and non-transitory computer-readable mediums

Those skilled in the art will recognize that the various embodiments may include processing circuitry of various types. The processing circuitry might include, but are not limited to, general-purpose microprocessors; CPUs; digital signal processors (DSPs); specialized processors such as network processors (NPs) or network processing units (NPUs), GPUs; FPGAs; programmable logic device (PLD), or similar devices. The processing circuitry may operate under the control of unique program instructions stored in their memory (software and/or firmware) to execute, in combination with certain non-processor circuits, either a portion or the entirety of the functionalities described for the methods and/or systems herein. Alternatively, these functions might be executed by a state machine devoid of stored program instructions, or through one or more application-specific integrated circuits (ASICs), where each function or a combination of functions is realized through dedicated logic or circuit designs. Naturally, a hybrid approach combining these methodologies may be employed. For certain disclosed embodiments, a hardware device, possibly integrated with software, firmware, or both, might be denominated as circuitry, logic, or circuits "configured to" or "adapted to" execute a series of operations, steps, methods, processes, algorithms, functions, or techniques as described herein for various implementations.

Additionally, some embodiments may incorporate a non-transitory computer-readable storage medium that stores computer-readable instructions for programming any combination of a computer, server, appliance, device, module, processor, or circuit (collectively "system"), each equipped with processing circuitry. These instructions, when executed, enable the system to perform the functions as delineated and claimed in this document. Such non-transitory computer-readable storage mediums can include, but are not limited to, hard disks, optical storage devices, magnetic storage devices, read-only memory (ROM), programmable read-only memory (PROM), erasable programmable read-only memory (EPROM), electrically erasable programmable read-only memory (EEPROM), flash memory, etc. The software, once stored on these mediums, includes executable instructions that, upon execution by one or more processors or any programmable circuitry, instruct the processor or circuitry to undertake a series of operations, steps, methods, processes, algorithms, functions, or techniques as detailed herein for the various embodiments.

### Conclusion

In this disclosure, including the claims, the phrases "at least one of" or "one or more of" when referring to a list of items mean any combination of those items, including any single item. For example, the expressions "at least one of A, B, or C," "at least one of A, B, and C," "one or more of A, B, or C," and "one or more of A, B, and C" cover the possibilities of: only A, only B, only C, a combination of A and B, A and C, B and C, and the combination of A, B, and C. This can include more or fewer elements than just A, B, and C. Additionally, the terms "comprise," "comprises," "comprising," "include," "includes," and "including" are intended to be open-ended and non-limiting. These terms specify essential elements or steps but do not exclude additional elements or steps, even when a claim or series of claims includes more than one of these terms.

Although operations, steps, instructions, blocks, and similar elements (collectively referred to as "steps") are shown or described in the drawings, descriptions, and claims in a specific order, this does not imply they must be performed in that sequence unless explicitly stated. It also does not imply that all depicted operations are necessary to achieve desirable results. In the drawings, descriptions, and claims, extra steps can occur before, after, simultaneously with, or between any of the illustrated, described, or claimed steps. Multitasking, parallel processing, and other types of concurrent processing are also contemplated. Furthermore, the separation of system components or steps described should not be interpreted as mandatory for all implementations; also, components, steps, elements, etc. can be integrated into a single implementation or distributed across multiple implementations.

While this disclosure has been detailed and illustrated through specific embodiments and examples, it should be understood by those skilled in the art that numerous variations and modifications can perform equivalent functions or achieve comparable results. Such alternative embodiments and variations, even if not explicitly mentioned but that achieve the objectives and adhere to the principles disclosed herein, fall within the spirit and scope of this disclosure. Accordingly, they are envisioned and encompassed by this disclosure and are intended to be protected under the associated claims. In other words, the present disclosure anticipates combinations and permutations of the described elements, operations, steps, methods, processes, algorithms, functions, techniques, modules, circuits, and so on, in any conceivable order or manner-whether collectively, in subsets, or individually-thereby broadening the range of potential embodiments.

## Claims

1. A method (500) for detecting and responding to threats in a cloud native computing environment (400), the method (500) comprising:
collecting (502), by one or more sensors (406) configured to monitor container hosts comprising Kubernetes nodes (450), runtime telemetry (408) comprising process activity, system call traces, and network traffic data;
ingesting (504) the runtime telemetry (408) into a data fabric (300) together with log data (416) from a cloud system (100) configured to block suspicious traffic;
analyzing (506), by a threat detection, investigation, and response application (340, 430) operating on the data fabric (300), the runtime telemetry (408) and the log data (416) to identify one or more indicators of compromise;
correlating (508) an event blocked by the cloud system (100) with at least one identified indicator of compromise by mapping the blocked event to a specific containerized workload using the runtime telemetry (408); and
initiating (510), based on the correlating (508), an automated remediation action in the cloud native computing environment (400).

2. The method (500) of claim 1, wherein collecting (502) the runtime telemetry (408) comprises deploying an extended Berkeley Packet Filter module (460) in an operating system kernel (456) of each Kubernetes node (450) and filtering kernel level events via the extended Berkeley Packet Filter module (460) to capture real time process activity and network flows without modifying application code executed by a pod (452).

3. The method (500) of claim 1 or claim 2, wherein the one or more sensors (406) execute in user space (454) on each Kubernetes node (450) and subscribe to kernel level signals produced by the extended Berkeley Packet Filter module (460).

4. The method (500) of any preceding claim, further comprising forwarding, by each sensor (406), the runtime telemetry (408) to a collector (462) within a Kubernetes cluster of the cloud native computing environment (400).

5. The method (500) of claim 4, wherein the collector (462) compresses and deduplicates the runtime telemetry (408) and applies a personally identifiable information scrubbing policy prior to sending the runtime telemetry (408) to the data fabric (300).

6. The method (500) of any preceding claim, wherein ingesting (504) into the data fabric (300) comprises unifying, in the data fabric (300), the runtime telemetry (408) with cloud logs from the cloud system (100) and Kubernetes metadata associated with pods (452) to associate the runtime telemetry (408) with a corresponding application (404) or microservice configuration.

7. The method (500) of any preceding claim, wherein analyzing (506) comprises applying signature based detection to the runtime telemetry (408) to detect known intrusion patterns, suspicious file hashes, command and control beacons, reverse shell exploits, or privilege escalations.

8. The method (500) of claim 7, wherein the signature based detection incorporates threat intelligence from at least one of a threat intelligence feed and a well known tactics, techniques, and procedures framework.

9. The method (500) of any preceding claim, wherein analyzing (506) comprises performing machine learning based behavioral anomaly detection by establishing baselines for at least one of network behavior and system behavior using packet flows and process hierarchies derived from the runtime telemetry (408) and flagging deviations from the baselines.

10. The method (500) of any preceding claim, wherein correlating (508) comprises matching a malicious domain name or Internet Protocol address associated with the blocked event to a network flow record and to a process tree entry derived from the runtime telemetry (408), and identifying a specific pod (452) or containerized workload as impacted.

11. The method (500) of any preceding claim, wherein the correlating (508) associates the blocked event with the impacted pod (452) by using Kubernetes metadata comprising at least one of pod labels, deployments, and replica sets.

12. The method (500) of any preceding claim, wherein the automated remediation action comprises deploying or updating a micro segmentation policy to quarantine the impacted pod (452) or containerized workload and restrict network communications associated with the impacted pod (452).

13. The method (500) of any preceding claim, wherein the automated remediation action comprises at least one of restarting the impacted pod (452), revoking credentials associated with the impacted pod (452), modifying a firewall rule enforced by the cloud system (100), and rolling back to a known good container image.

14. The method (500) of any preceding claim, further comprising monitoring east west traffic (414) among pods (452) by capturing kernel level packet data via the extended Berkeley Packet Filter module (460) and triggering a micro segmentation rule in response to detecting malicious or anomalous lateral movement.

15. The method (500) of any preceding claim, wherein the threat detection, investigation, and response application (340, 430) operates non inline with respect to north south traffic (410) such that no inline proxy is required for the collecting (502), ingesting (504), analyzing (506), correlating (508), and initiating (510).
